# EUROPÄISCHE PATENTSCHRIFT

(11) **EP 1 327 857 B1**
(45) Veröffentlichungstag und Bekanntmachung des Hinweises auf die Patenterteilung: **23.12.2009**
(21) Anmeldenummer: 02024235.0
(22) Anmeldetag: 31.10.2002
(51) Int. Cl.: G01C 21/36, G08G 1/0969

(54) **Verfahren zur Darstellung von Ortsnamen**
Method of displaying city names
Procédé pour affichage d'un nom de ville

(30) Priorität: 15.01.2002 DE 10201161
(43) Veröffentlichungstag der Anmeldung: 16.07.2003
(73) Patentinhaber: ROBERT BOSCH GMBH, 70442 Stuttgart (DE)
(72) Erfinder: Listle, Holger, 31195 Lamspringe (DE); Lueer, Stefan, 31137 Hildesheim (DE)

(56) Entgegenhaltungen:
- EP-A- 1 302 752
- US-A- 5 835 854
- US-A- 6 081 803

## Beschreibung

### Stand der Technik

Die Erfindung geht aus von einem Verfahren zur Darstellung von Ortsdaten in einer Anzeige nach der Gattung des Hauptanspruchs. Es sind schon Navigationsvorrichtungen bekannt, bei denen im Fahrzeug die Ortsnamen in einer Kartendarstellung oder als eine Namensauflistung insbesondere zur Ziel- oder Standorteingabe dargestellt werden. Manche Städte, besonders größere und wichtige Städte, haben dabei in verschiedenen Sprachen oftmals verschiedene Namen. Verschiedene Namen einer Stadt in verschiedenen Sprachen werden als Exonyme bezeichnet. Bei bisherigen Systemen werden mehrere Namen einer Stadt in verschiedenen Sprachen gleichzeitig angezeigt. Hierdurch wird jedoch die Anzeige unübersichtlich und kann bei Personen, die die Stadt nur unter einem Namen kennen, störend wirken. Zudem wird bei der Eingabe eines Fahrziels ein Benutzer entweder durch ihm nicht bekannte Exonyme gestört, die zudem in einer Auswahlliste Platz beanspruchen oder, falls keine Exonyme angezeigt werden, findet er gegebenenfalls eine Stadt nicht unter dem Namen, unter dem er sie kennt.

Aus der US 6,081,803 A ist ein Navigationsverfahren bekannt, bei dem in verschiedenen Sprachen Exonyme in einer Datenbank gespeichert sind. Die verschiedenen Schreibweisen sind durch Attribute in der Datenbank gekennzeichnet. In einer ersten Ausführungsform kann der Benutzer aus den verschiedenen, zur Verfügung stehenden Sprachen eine Ausgabesprache auswählen. Wählt der Benutzer keine Sprache aus, so wird die Sprache des Landes angenommen, in dem sich das Fahrzeug befindet.

Aus der US 5,835,854 A ist ein RDS/TMC-Empfänger bekannt, mittels dem Verkehrsnachrichten kodiert empfangen werden und an einen Benutzer in einer von dem Benutzer vorgewählten Sprache ausgegeben werden. Ortsnamen können dabei entweder in der jeweitigen Landessprache oder sowohl in der Landessprache, als auch in der Sprache des Benutzers ausgegeben werden.

Aus der nachveröffentlichten EP 1 302 752 A2 ist eine Anzeige für eine Navigationsvorrichtung bekannt, bei der in einer Liste der Stadtname in der Landessprache sowie zugehörige Exonyme in verschiedenen anderen Sprachen aufgenommen sind.

### Vorteile der Erfindung

Das erfindungsgemäße Verfahren mit den Merkmalen des unabhängigen Anspruchs 1 hat demgegenüber den Vorteil, dass Ortsnamen, für die mehrere, verschiedene Ortsnamen in verschiedenen Sprachen existieren, in einer gewählten Sprache angezeigt werden. Hierdurch wird die Anzeige übersichtlich und kann zudem an die Bedürfnisse des Benutzers angepasst werden, so dass ihm stets die für ihn optimale Namensbezeichnung angezeigt wird. Damit kann sich der Benutzer sowohl in der Karte bzw. anhand von außerhalb des Fahrzeugs angeordneten Verkehrsschildern besser orientieren.

Durch die in den abhängigen Ansprüchen aufgeführten Maßnahmen sind vorteilhafte Weiterbildungen und Verbesserungen des im unabhängigen Anspruchs 1 angegebenen Verfahrens möglich. Besonders vorteilhaft ist, die gewählte Sprache mit einem gespeicherten Sprachattribut des Ortsnamens zu vergleichen, um eine entsprechende Darstellung in der gewünschten Sprache vorzunehmen. Durch die Vorgabe eines Sprachattributes ist es einer Rechenvorrichtung damit einfach möglich, die gewünschte sprachliche Darstellung des Ortsnamens auszuwählen und darzustellen.

Ferner ist es vorteilhaft, alle Ortsnamen in einer vorzugsweise durch den Benutzer gewählten Sprache darzustellen, so dass sich dem Benutzer ein geschlossenes Sprachbild in der Anzeige bietet.

Insbesondere ist die Darstellung eines Ortsnamens in der Sprache eines Benutzers für die Eingabe eines Fahrziels von Vorteil, da er die Stadt in seiner Sprache und damit auch in der ihm bekannten Schreibung eingeben kann, wodurch insbesondere bei einer buchstabenweisen Eingabe die Auswahl des Fahrziels vereinfacht wird.

Besonders vorteilhaft ist ferner, die gewählte Sprache in Abhängigkeit von der Position des Fahrzeugs automatisch zu wählen. Hierbei ist insbesondere die Sprache zu wählen, in der die Verkehrsbeschilderung in der Umgebung des Fahrzeugs ausgeführt ist, in der sich das Fahrzeug gerade befindet. Werden alle Ortsnamen in der Anzeige entsprechend dieser Sprache dargestellt, so stellt sich einem Benutzer auf den Verkehrsschildern das gleiche Namensbild wie in der Kartendarstellung dar.

Erfolgt eine grenzüberschreitende Anpassung der Verkehrsschilder, d.h. sind Orte in einem anderen Sprachgebiet in der dort geltenden Sprache angezeigt, so ist es vorteilhaft, eine Anzeige vorzusehen, bei der der Ortsname in der jeweiligen Landessprache des Gebiets angezeigt wird, in dem sich der Ort befindet.

Es ist ferner vorteilhaft, durch eine Benutzerauswahl ergänzende Anzeigen von Namen in anderen Sprachen auszugeben, wobei diese Funktion vorzugsweise über eine Menüauswahl steuerbar ist. Hierdurch entsteht keine Verwirrung des Benutzers, da dieser selber die Einblendung zusätzlicher Ortsnamen anordnet und sich somit auf die zusätzlich angezeigten Ortsnamen einstellen kann.

Besonders vorteilhaft ist, auf einem Informationsträger die Ortsnamen mit Sprachattributen zu speichern, so dass bei einer Ausgabe der Ortsnamen durch die Zuweisung der Sprachattribute eine Zuweisung zu einer jeweiligen Sprache unmittelbar möglich ist.

Besonders vorteilhaft ist, das Verfahren in einer Navigationsvorrichtung in einem Fahrzeug auszuführen, da einerseits Fahrzeuge durch verschiedene Länder bewegt werden können und andererseits die Fahrzeuge auch von verschiedenen Besitzern benutzt werden. Dies gilt insbesondere für Mietfahrzeuge. Hierbei können sich die Sprachen der Benutzer unterscheiden, wobei mit der erfindungsgemäßen Navigationsvorrichtung durch eine einfache Benutzereingabe ein Wechsel der Anzeigendarstellung der Ortsnamen möglich ist.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Navigationsvorrichtung,
Figur 2 ein auf einem erfindungsgemäßen Informationsträger gespeicherter Datensatz,
Figur 3 ein Ausführungsbeispiel für einen Ablauf eines erfindungsgemäßen Verfahrens,
Figur 4 ein Ausführungsbeispiel für eine Menüauswahl eines Fahrziels bei einer gewählten Bediensprache deutsch,
Figur 5 ein Ausführungsbeispiel für eine Menüauswahl zur Fahrzieleingabe bei einer gewählten Bediensprache niederländisch.

### Beschreibung des Ausführungsbeispiels

Das erfindungsgemäße Verfahren kann in beliebigen Fahrzeugen verwendet werden, z.B. auch in Flugzeugen oder Schiffen, und wird im folgenden Ausführungsbeispiel anhand einer Verwendung in einer Navigationsvorrichtung in einem Kraftfahrzeug erläutert.

Insbesondere große Städte haben in verschiedenen Sprachen jeweils eine eigene Bezeichnung:
z.B. "Köln" (deutsch) hat in anderen Sprachen z.B. die folgenden Bezeichnungen: "Cologne" (englisch und französisch), "Colon" (spanisch), "Colonia" (italienisch), "Keulen" (niederländisch). Ferner haben in sprachlichen Grenz- und Übergangsgebieten zwischen zwei Sprachen auch kleinere Orte jeweils einen unterschiedlichen Ortsnamen in der jeweiligen Landessprache, z.B. im Elsass oder in der Lausitz. Unter einem Ortsnamen ist hierbei nicht nur die Bezeichnung einer Siedlung, einer Gemeinde oder einer Stadt zu verstehen, sondern darunter fallen auch andere Ortsbezeichnungen, z.B. von Landschaftsformen, Bergen, Wäldern oder Sehenswürdigkeiten.

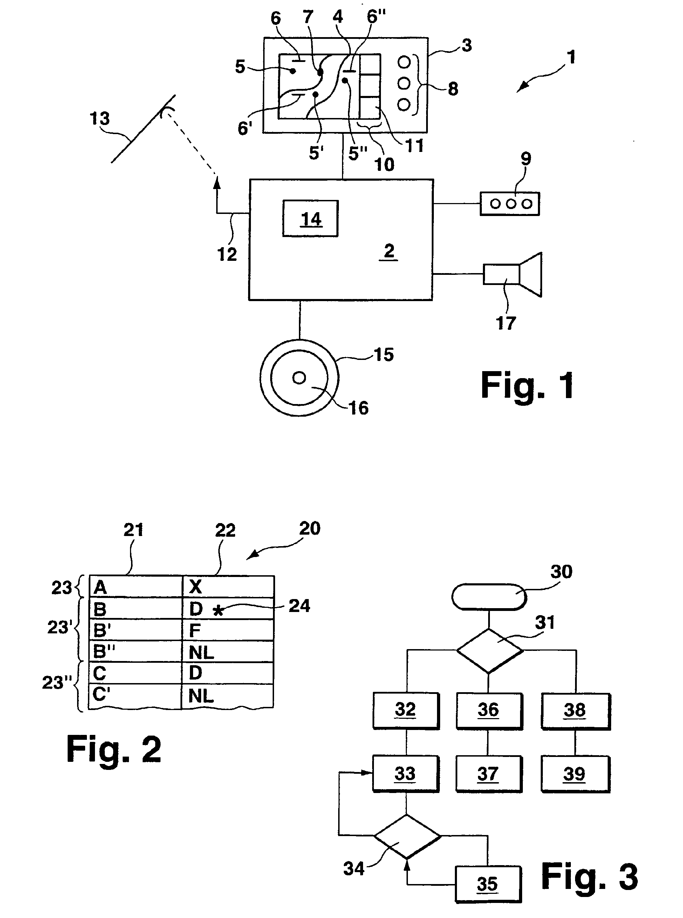

In der Figur 1 ist eine erfindungsgemäße Navigationsvorrichtung 1 mit einer Navigationseinheit 2 und einer Anzeigevorrichtung 3 dargestellt. In einer Anzeigefläche 4 der Anzeigevorrichtung 3 ist eine Straßenkarte mit eingezeichneten Orten 5, 5', 5'' dargestellt. Den Orten 5, 5', 5'' sind jeweils Ortsnamen 6, 6', 6'' zugeordnet. In der Figur 1 sind die Ortsnamen jeweils nur schematisch wiedergegeben. In der Straßenkarte ist vorzugsweise eine aktuelle Fahrzeugposition 7 eingetragen. Ferner sind über die Anzeigevorrichtung 3 auch Fahrhinweise, z.B. Richtungspfeile, ausgebbar. Die Navigationsvorrichtung 1 wird über neben der Anzeigefläche 4 angeordnete Bedienelemente 8 bzw. über eine Bedieneinheit 9, die optional an anderer Stelle im Fahrzeug angeordnet ist, gesteuert. Die Anzeigefläche 4 kann in einem bevorzugten Ausführungsbeispiel auch als eine berührungsempfindliche Touch-Screen-Oberfläche ausgeführt sein, so dass Eingaben über ein Berühren der Anzeigefläche 4 vorgenommen werden können. Funktionen sind in einem Auswahlmenü 10 mit einzelnen Auswahlfeldern 11 auswählbar, wobei in den Auswahlfeldern die auswählbaren Funktionen durch ein Symbol oder durch einen Text darstellbar ist. Die Navigationseinheit 2 weist ferner eine Ortungsvorrichtung 12 auf, die über eine Funkverbindung zu einem Satelliten 13 eine Positionsbestimmung der Navigationsvorrichtung 1 bzw. des Fahrzeugs vornimmt, in das die Navigationsvorrichtung 1 eingebaut ist. Die Ortung erfolgt dabei vorzugsweise über das GPS (Global Positioning System). Ferner können auch weitere, auf die Fahrzeugsysteme zugreifende Ordnungsvorrichtungen, z.B. Wegstreckensensoren, mit der Navigationseinheit 2 verbunden sein. Die Navigationseinheit 2 weist ferner eine Recheneinheit 14 auf, die anhand der ermittelten Position durch Zugriff auf ein Datenträgerlaufwerk 15 mit einem Informationsträger 16, z.B. eine CD-ROM, eine DVD oder eine Festplatte, eine Position in der auf dem Informationsträger 16 gespeicherten digitalen Karte ermittelt. Die Recheneinheit 14 bestimmt anhand der digitalen Karte eine Fahrtroute von der ermittelten aktuellen Position zu einem über die Bedienelemente 8, 9 eingegebenen Fahrziel. Über die Anzeigefläche 4 und/oder einen Lautsprecher 17 werden Fahranweisungen an den Fahrer ausgegeben. Über die Bedienelemente 8, 9 kann ein Fahrer gemäß dem anhand der Figur 3 noch zu erläuternden Verfahren die Darstellung der Ortsnamen 6, 6', 6" hinsichtlich ihrer Sprache beeinflussen. Vorzugsweise erfolgt auch die Ausgabe der Ortsnamen über den Lautsprecher 17 entsprechend der für die Anzeige der jeweiligen Ortsnamen vorgesehenen Sprache, so dass die Sprache der Ortsnamen in der Anzeigefläche 4 mit der Sprache der Ortsnamen, die von dem Lautsprecher 17 ausgegeben werden, übereinstimmen. Hierbei ist es nicht erforderlich, dass auch der Begleittext, z.B. "rechts abbiegen" in der jeweiligen Sprache des Ortsnamens ausgegeben wird. Vielmehr ist dieser Text durch eine gesonderte Eingabe von dem Benutzer vorwählbar, so dass die Fahranweisungen in der für den Benutzer optimalen Sprache ausgegeben werden.

In der Figur 2 ist ein Ausführungsbeispiel für einen auf dem Informationsträger gespeicherten Datensatz 20 dargestellt. In einer ersten Spalte 21 sind Ortsnamen in verschiedenen Sprachen gespeichert. In einer zweiten Spalte 22 sind jeweils Sprachattribute den in der ersten Spalte 21 abgelegten Ortsnamen zugeordnet. Die verschiedenen Sprachvarianten des Ortsnamens sind jeweils zu Blöcken 23, 23', 23'' zusammengefasst. Bei der Ausgabe von Ortsnamen ermittelt die Recheneinheit 14 nun anhand der in der zweiten Spalte 22 abgelegten Sprachattribute bei Vorgabe des jeweiligen auszugebenden Blocks den entsprechenden Ortsnamen in der ersten Spalte 21. Der erste Block 23 besteht nur aus einem Eintrag, dem Ortsnamen a, der in allen zur Verfügung stehenden Sprachen die gleiche Fassung aufweist (X). Der zweite Block 23' besteht aus drei Einträgen b, b', b'', wobei eine Fassung des Ortsnamens jeweils für die deutsche (D) , die französische (F) und die niederländische Sprache (NL) vorliegt. Sollte weder die französische noch die niederländische Sprache vorgewählt werden, so erfolgt automatisch die Darstellung in deutscher Sprache. Diese Ausgabe ist in der Zeichnung durch eine Markierung 24 gekennzeichnet, die z.B. in Form eines Datenflags realisiert ist. Für den dritten Block 23'' sind in der Anzeigevorrichtung 3 zwei verschiedene Sprachvarianten c, c' für die deutsche (D) und die niederländische Sprache (NL) darstellbar. Listen können entsprechend der Sprachengebiete, in dem der Informationsträger eingesetzt werden soll, und/oder der zu verwendenden Sprachen, für die der Informationsträger 16 vorgesehen ist, erweitert werden.

In der Figur 3 ist ein Ablauf eines erfindungsgemäßen Verfahrens dargestellt. Ausgehend von einem Initialisierungsschritt 30, z.B. dem Einschalten der Navigationsvorrichtung 1, erfolgt eine Benutzerabfrage in einem Eingabeschritt 31. In einem bevorzugten Ausführungsbeispiel kann die Benutzerabfrage auch entweder durch einen Standardwert vorgegeben sein, bzw. bei der anfänglichen Einrichtung der Navigationsvorrichtung mit der allgemeinen Sprachenauswahl für die Benutzung des Navigationssystems durch den Benutzer mit vorgegeben werden. In einer weiteren bevorzugten Ausführungsform wird ein Benutzer zu einer Eingabe aufgefordert, wenn sich das Fahrzeug in die Nähe einer Sprachgrenze bewegt.

Der Benutzer hat nun verschiedene Möglichkeiten, sich die Ortsnamen, für die verschiedene Spracheinträge existieren, anzeigen zu lassen. Mit einer ersten Eingabe wählt er ausgehend von dem Eingabeschritt 31 eine positionsabhängige Darstellung aus. In einem Ermittlungsschritt 32 wird eine aktuelle Fahrzeugposition ermittelt, wobei der aktuellen Fahrzeugposition von der Recheneinheit 14 eine Sprachregion zugewiesen wird, in der die ermittelte Fahrzeugposition liegt. Bei zwei- oder mehrsprachigen Gebieten ist erfindungsgemäß eine zusätzliche Benutzerauswahl zwischen diesen Sprachen erforderlich. An den Ermittlungsschritt 32 schließt sich ein Darstellungsschritt 33 an, in der alle Ortsnamen in der Anzeigefläche 4 in der Sprache ausgegeben werden, die dem Gebiet zugeordnet ist, in dem die aktuelle Fahrzeugposition gemäß dem Ermittlungsschritt 32 liegt. In einem anschließenden Prüfschritt 34 wird überprüft, ob sich die Position in ein anderes Sprachgebiet verschoben hat. Ist dies nicht der Fall, so wird nach einer vorgegebenen Zeitspanne ein erneuter Positionsbestimmungsschritt 35 ausgeführt, von dem zu dem Prüfschritt 34 zurückverzweigt wird. Wird die Position in einem anderen Sprachgebiet als bisher festgestellt, so wird zu dem Darstellungsschritt 33 zurückverzweigt und die Ortsnamendarstellung wird geändert.

In einer zweiten Auswahl erfolgt anschließend an den Eingabeschritt 31 ein Auswahlschritt 36, gemäß dem ein Benutzer eine Sprache auswählt, in der die Ortsnamen angezeigt werden sollen. In einer bevorzugten Ausführungsform ist hierfür keine gesonderte Benutzereingabe erforderlich, sondern es wird die Sprache verwendet, die ein Benutzer bei der Grundinitialisierung der Navigationsvorrichtung 1 als die Sprache eingegeben hat, in der er mit der Navigationsvorrichtung 1 kommunizieren will, d.h. in der die Auswahlmenüs angezeigt sowie akustische Fahranweisungen ausgegeben werden. In einem an den Auswahlschritt 36 anschließenden Darstellungsschritt 37 werden alle Ortsnamen, sofern für sie ein gesondertes Sprachattribut in der jeweiligen Sprache gesetzt ist, in der durch den Benutzer vorgegebenen Sprache ausgegeben. Gemäß der ersten und der zweiten Auswahl werden damit alle Ortsnamen in der gleichen Sprache angezeigt, sofern für sie eine Sprachdarstellung in der jeweiligen Sprache existiert. In einer weiteren Ausführungsform, die insbesondere für eine Listenauswahl Verwendung findet, wird der Ortsnamen neben der Fassung in der gewählten Sprache zumindest noch mit seinem Namen oder seinen Namen in der Sprache des Sprachgebiets, in dem er liegt, dargestellt und insbesondere in die Listenauswahl aufgenommen.

In einer dritten Auswahl ist eine ortsgebundene Darstellung des Ortsnamens möglich. In einem Festlegungsschritt 38 wird jeweils der Ortsname in der Sprache dargestellt, in dessen Sprachgebiet der Ort liegt. In einem anschließenden Darstellungsschritt 39 erfolgt die Anzeige der jeweiligen Ortsnamen in den den Orten zugewiesenen Sprachen.

Ergänzend zu den jeweiligen Darstellungsschritten 33, 37, 39 kann durch eine Auswahl mittels der Bedienelemente 8, 9 auch eine zusätzliche Ausgabe von Ortsnamen in weiteren Sprachen in der Anzeige zusätzlich oder statt der Anzeige in der gewählten Sprache dargestellt werden. Damit ist eine Information über eine Ortsbezeichnung in einer anderen Sprache möglich, ohne die grundsätzliche Spracheinstellung wechseln zu müssen. Nach einer vorgegebenen Zeit kehrt die Darstellung in der Anzeigefläche 4 automatisch in die Anzeige in der vorgewählten Sprache zurück.

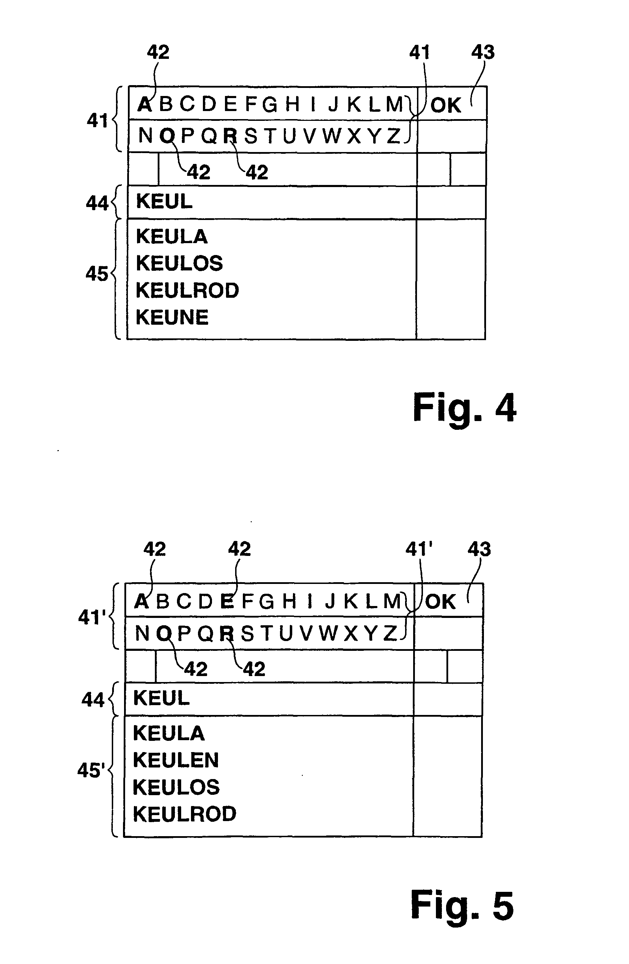

In der Figur 4 ist eine Darstellung in der Anzeigefläche 4 gezeigt, die bei einer Eingabe eines Fahrziels in der Anzeigefläche 4 dargestellt wird. In einem oberen Bereich ist ein Buchstabenfeld 41 dargestellt, das zur Auswahl einzelner Buchstaben mittels der Bedienelemente 8, 9 dient. Auswählbare Buchstaben 42, die eine Ergänzung eines angezeigten Wortanfangs zu einem vollständigen Fahrziel ermöglichen, sind gegenüber den übrigen Buchstaben hervorgehoben in dem Buchstabenfeld 41 dargestellt. Ein mittels der Auswahl aus dem Buchstabenfeld eingegebenes Fahrziel ist über eine Bestätigungsauswahl 43 "OK" als Fahrziel bestätigbar, so dass anschließend von der Navigationseinheit 2 eine Fahrtroute von der aktuellen Fahrzeugposition zu dem eingegebenen Fahrziel berechnet wird. In einem Eingabefeld 44 werden die bisher eingegebenen Buchstaben angezeigt. In einer Auswahlliste 45 werden Fahrziele angezeigt, zu denen die bisher in dem Eingabefeld 44 angezeigten Buchstaben ergänzbar sind. Ferner werden weitere Fahrziele, die alphabetisch auf diese ergänzbaren Orte folgen, gegebenenfalls mit dargestellt. In dem hier dargestellten Ausführungsbeispiel ist die bisherige Eingabe "Keul" mittels der Eingabe der Buchstaben A, O bzw. R zu den Fahrzielen Keula, Keulos oder Keulrod ergänzbar. Als nächstes Wort folgt in dieser List Keune.

In der Figur 5 ist die Auswahlliste 45' für eine Eingabe bei einer gewählten Bediensprache niederländisch angezeigt. In die Auswahlliste 45' ist die niederländische Schreibweise für die Stadt Köln "Keulen" aufgenommen, zu der durch die Eingabe des Buchstabens E aus dem Buchstabenfeld 41' in dem oberen Bereich, das nun auch die Eingabe des Buchstabens E zuläßt, gelangt werden kann. Eine Anzeige der niederländischen Schreibweise "Keulen" unterbleibt in der Darstellung der Auswahlliste bei gewählter, deutscher Betriebssprache. Wird als Anzeigesprache deutsch vorgesehen, wird statt dessen die deutsche Schreibweise "Köln" bei der Eingabe der Buchstabenfolge "Koeln" bzw. "Köln", sofern vorgesehen, angezeigt. Je nach Einstellung, kann auch bei niederländischer Betriebssprache die Auswahl der deutschen Eingabe "Köln" ermöglicht werden.

## Patentansprüche

1. Verfahren zur Darstellung von Ortsnamen, insbesondere in einer Anzeige einer Navigationsvorrichtung, wobei eine Sprache gewählt wird und die Ortsnamen in der gewählten Sprache ausgegeben werden, wobei eine aktuelle Fahrzeugposition ermittelt wird und der aktuellen Fahrzeugposition eine Sprachregion zugewiesen wird, in der die ermittelte Fahrzeugposition liegt,
**dadurch gekennzeichnet, dass**
in zwei- oder mehrsprachigen Gebieten eine Benutzerauswahl der gewählten Sprache aus den zwei oder mehreren Sprachen des zwei- oder mehrsprachigen Gebietes erfolgt.

2. Verfahren nach Anspruch 1, **dadurch gekennzeichnet, dass** die gewählte Sprache mit einem gespeicherten Sprachattribut eines Ortsnamens verglichen wird und dass der Ortsname in der Form ausgegeben wird, die dem der gewählten Sprache zugeordneten Sprachattribut zugewiesen ist.

3. Verfahren nach einem der vorhergehenden Ansprüche, **dadurch gekennzeichnet, dass** alle Ortsnamen in der Anzeige in einer Sprache ausgegeben werden.

4. Verfahren nach einem der vorhergehenden Ansprüche, **dadurch gekennzeichnet, dass** die Ortsnamen in einer weiteren Sprache erst nach einer Benutzereingabe ausgegeben werden.

5. Verfahren nach einem der vorhergehenden Ansprüche, **dadurch gekennzeichnet, dass** die Ortsnamen in einer Kartendarstellung oder in einem Auswahlmenü in einer Anzeigevorrichtung ausgegeben werden.

## Claims

1. Method for showing place names, particularly in a display in a navigation apparatus, wherein a language is chosen and the place names are output in the chosen language, wherein a current vehicle position is ascertained and the current vehicle position is assigned a language region which contains the ascertained vehicle position,
**characterized in that**
in bilingual or multilingual areas, a user selection is made for the chosen language from the two or more languages of the bilingual or multilingual area.

2. Method according to Claim 1, **characterized in that** the chosen language is compared with a stored language attribute of a place name, and **in that** the place name is output in the form which has been assigned to the language attribute associated with the chosen language.

3. Method according to one of the preceding claims, **characterized in that** all place names are output in the display in one language.

4. Method according to one of the preceding claims, **characterized in that** the place names are not output in a further language until after a user input.

5. Method according to one of the preceding claims, **characterized in that** the place names are output in a map presentation or in a selection menu in a display apparatus.

## Revendications

1. Procédé de présentation de noms de lieux, en particulier sur l'affichage d'un dispositif de navigation, dans lequel une langue est sélectionnée et les noms de lieux sont présentés dans la langue sélectionnée, la position actuelle du véhicule est déterminée et une zone linguistique dans laquelle la position déterminée du véhicule est située est associée à la position actuelle du véhicule,
**caractérisé en ce que**
dans les zones à deux ou plusieurs langues, l'utilisateur sélectionne une langue parmi les deux ou plusieurs langues de la zone à deux ou plusieurs langues.

2. Procédé selon la revendication 1, **caractérisé en ce que** la langue sélectionnée est comparée à un attribut linguistique conservé en mémoire d'un nom de lieu et **en ce que** le nom de lieu est présenté sous la forme réservée à l'attribut linguistique associé à la langue sélectionnée.

3. Procédé selon l'une des revendications précédentes, **caractérisé en ce que** tous les noms de lieux sont présentés en une seule langue sur l'affichage.

4. Procédé selon l'une des revendications précédentes, **caractérisé en ce que** les noms de lieux ne sont présentés en une autre langue qu'après introduction d'une commande par l'utilisateur.

5. Procédé selon l'une des revendications précédentes, **caractérisé en ce que** les noms de lieux sont présentés sur un dispositif d'affichage sous forme cartographique ou dans un menu de sélection.
